(19) Europäisches Patentamt / European Patent Office / Office européen des brevets

(11) **EP 4 245 535 A1**

(12) **EUROPEAN PATENT APPLICATION**
published in accordance with Art. 153(4) EPC

(43) Date of publication:
**20.09.2023 Bulletin 2023/38**

(21) Application number: **21891563.5**

(22) Date of filing: **12.10.2021**

(51) International Patent Classification (IPC):
**B32B 27/36** (2006.01)      **B65D 65/40** (2006.01)
**C08L 67/02** (2006.01)      **C08K 3/013** (2018.01)
**B32B 7/04** (2019.01)      **C08G 63/183** (2006.01)
**C08G 63/185** (2006.01)

(52) Cooperative Patent Classification (CPC):
**B32B 7/04; B32B 27/36; B65D 65/40;
C08G 63/183; C08G 63/185; C08K 3/013;
C08L 67/02;** Y02W 30/80

(86) International application number:
**PCT/JP2021/037657**

(87) International publication number:
**WO 2022/102316 (19.05.2022 Gazette 2022/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.11.2020   JP 2020190251
16.11.2020   JP 2020190252
12.04.2021   JP 2021067059
12.04.2021   JP 2021067060**

(71) Applicant: **Mitsubishi Chemical Corporation
Chiyoda-ku
Tokyo 100-8251 (JP)**

(72) Inventors:
• **NAKAGAWA Youhei
Tokyo 100-8251 (JP)**
• **HUANG Wenxin
Tokyo 100-8251 (JP)**
• **YASUTOMI Shirou
Tokyo 100-8251 (JP)**

(74) Representative: **Hoffmann Eitle
Patent- und Rechtsanwälte PartmbB
Arabellastraße 30
81925 München (DE)**

(54) **POLYESTER-BASED SEALANT FILM**

(57)     Provided is a polyester-based sealant film having highly excellent heat seal strength and excellent recyclability. A polyester-based sealant film of a first aspect of the present invention is a laminated film composed of at least two layers and having a sealing layer and an outermost layer, in which the sealing layer includes a copolymerized polyester formed from a copolymer of terephthalic acid as well as another dicarboxylic acid component and a diol component, the outermost layer includes homopolyethylene terephthalate as a main component, the laminated film has a lamination configuration in which a content proportion (mol%) of the other dicarboxylic acid component in each layer decreases from the sealing layer toward the outermost layer, and a heat seal strength obtainable when the sealing layers of the laminated films are sealed at 0.2 MPa for 1 second in the range of 140°C to 220°C is 25 N/15 mm or higher.

EP 4 245 535 A1

**Description**

TECHNICAL FIELD

The present invention relates to a polyester-based sealant film.

BACKGROUND ART

Polyesters have excellent properties such as heat resistance, weather resistance, mechanical strength, transparency, chemical resistance, and gas barrier properties, and since polyesters are easily available even in view of price, polyesters are resins of high general-purpose usability and are currently widely utilized for containers for beverages and foods, packaging materials, molded articles, films, and the like.

In recent years, environmental problems such as global warming have become more serious, volume reduction of packaging materials such as packages is also underway, and there has been a demand for promoting recycling in order to reutilize used packaging materials as resources. In contrast, in conventional packaging materials, a biaxially stretched film is used as a base material film, a film laminated body obtained by heat sealing or laminating a sealant film as the innermost layer on this base material film, and various functions such as storage property are imparted by combining a plurality of materials having different characteristics, so that there is a problem that recycling is difficult.

For example, regarding conventional packaging materials, an unstretched sealant film formed from a polyolefin-based resin as disclosed in Patent Document 1 is used for a sealant layer of the packaging material.

Polyolefin-based resins such as polyethylene and polypropylene are known to have excellent heat sealability and high adhesiveness.

However, unstretched sealant films formed from polyolefin-based resins have excellent heat seal strength between polyolefin-based films; however, there is a problem that the unstretched sealant films have low heat seal strength with films formed from other materials such as a polyester.

Furthermore, there is also a problem that the unstretched sealant films have a high affinity for the aroma and medicinal ingredients of packaged contents and adsorb the components.

In view of such problems, Patent Documents 2 and 3 disclose polyester-based films obtained by imparting sealability to polyethylene terephthalate (PET).

These polyester-based films for sealant use have an advantage that since the polyester-based films have low affinity for various organic compounds, the polyester-based films are less likely to adsorb the components of the packaged contents.

Furthermore, since packaging materials based on a single material system composed of a polyester material can be realized by laminating other polyester-based base material films such as a transparent barrier vapor deposition PET or combining high barrier vapor deposition and printing processing technologies for polyester-based films, high recyclability can be expected.

However, the polyester-based films for sealant use as described in Patent Documents 2 and 3 have low seal strength and do not meet the market requirements.

For example, in the case of a film composed of a single layer configuration as described in Patent Document 2, even when the content of a copolymerized component is increased in order to increase the heat seal strength, because the melting point is lowered, the heat setting temperature at the time of film forming could not be raised, and it was difficult to achieve high seal strength.

In view of such problems, Patent Document 3 discloses a polyester-based film for sealant use having a multilayer configuration, in which a layer having heat sealability and other layers are divided, and the content of a copolymerized component in each layer is changed.

CITATION LIST

PATENT DOCUMENT

Patent Document 1: JP 2002-256116 A
Patent Document 2: WO 2014/175313 A
Patent Document 3: Japanese Patent No. 6724447

SUMMARY OF THE INVENTION

PROBLEM TO BE SOLVED BY THE INVENTION

The present invention was achieved in view of the above-described circumstances, and an object thereof is to provide a polyester-based sealant film having highly excellent heat seal strength and having excellent recyclability.

MEANS FOR SOLVING PROBLEM

The inventors of the present invention conducted a thorough investigation, and as a result, the inventors found that film breakage and delamination are factors that deteriorate the heat seal strength.

Further, the inventors found that delamination can be prevented by increasing the affinity between a sealing layer and other layers of a sealant film, and that breakage of a sealant film can be prevented by appropriately setting the thickness of the sealing layer, and as a result, highly excellent heat seal strength can be achieved.

Furthermore, with regard to a laminated film having heat sealability, it was found that excellent heat seal strength can be achieved by adopting a lamination configuration in which the content proportion of a copolymerized component in a heat sealing layer sequentially decreases in the film thickness direction from the heat sealing layer toward the outermost layer.

The present invention was completed based on such findings and includes the following aspects.

[1] A first aspect of the present invention is a polyester-based sealant film, the polyester-based sealant film being a laminated film composed of at least two layers and having a sealing layer and an outermost layer, wherein the sealing layer includes a copolymerized polyester formed from a copolymer of terephthalic acid as well as another dicarboxylic acid component and a diol component, the outermost layer includes homopolyethylene terephthalate as a main component, the laminated film has a lamination configuration in which a content proportion (mol%) of the other dicarboxylic acid component in each layer decreases from the sealing layer toward the outermost layer, and a heat seal strength obtainable when the sealing layers of the laminated films are sealed at 0.2 MPa for 1 second in the range of 140°C to 220°C is 25 N/15 mm or higher.

[2] A second aspect of the present invention is a polyester-based sealant film, the polyester-based sealant film being a laminated film composed of at least two layers and having a sealing layer and an outermost layer, wherein the sealing layer includes a copolymerized polyester formed from a copolymer of terephthalic acid as well as another dicarboxylic acid component and a diol component, the outermost layer includes homopolyethylene terephthalate as a main component, the laminated film has a lamination configuration in which a content proportion (mol%) of the other dicarboxylic acid component in each layer decreases from the sealing layer toward the outermost layer, the laminated film has a thickness of less than 50 $\mu$m, and a heat seal strength obtainable when the sealing layers of the laminated films are sealed at 0.2 MPa for 1 second in the range of 140°C to 200°C is 25 N/15 mm or higher.

[3] A third aspect of the present invention is a polyester-based sealant film, the polyester-based sealant film being a laminated film composed of at least two layers and having a sealing layer and an outermost layer, wherein each layer includes a copolymerized polyester formed from a copolymer of terephthalic acid as well as another dicarboxylic acid component and a diol component, the laminated film has a lamination configuration in which a content proportion (mol%) of the other dicarboxylic acid component in each layer decreases from the sealing layer toward the outermost layer, and a heat seal strength obtainable when the sealing layers of the laminated films are sealed at 0.2 MPa for 1 second in the range of 160°C to 200°C is higher than 25 N/15 mm.

[4] With regard to the item [1] or [2], it is preferable that the polyester-based sealant film has an intermediate layer composed of at least one layer between the sealing layer and the outermost layer.

[5] With regard to the item [4], it is preferable that the intermediate layer includes a copolymerized polyester formed from a copolymer of terephthalic acid as well as another dicarboxylic acid component and a diol component, and the laminated film has a lamination configuration in which the content proportion (mol%) of the other dicarboxylic acid component in each layer decreases from the sealing layer toward the outermost layer.

[6] With regard to the item [4] or [5], it is preferable that the intermediate layer is a single layer.

[7] With regard to the item [6], it is preferable that a difference between a proportion of a total content of the other dicarboxylic acid component of the sealing layer and a proportion of a total content of the other dicarboxylic acid component of the intermediate layer is 1 mol% to 20 mol%.

[8] With regard to the item [6] or [7], it is preferable that a difference between the proportion of the total content of the other dicarboxylic acid component of the intermediate layer and the proportion of the total content of the other dicarboxylic acid component of the outermost layer is 5 mol% to 20 mol%.

[9] With regard to the item [3], it is preferable that the polyester-based sealant film has an intermediate layer composed of at least one layer between the sealing layer and the outermost layer.

[10] With regard to the item [9], it is preferable that the intermediate layer includes a copolymerized polyester formed from a copolymer of terephthalic acid as well as another dicarboxylic acid component and a diol component, and a content proportion (mol%) of the other dicarboxylic acid component included in the sealing layer is higher than a content of the proportion (mol%) of the other dicarboxylic acid component included in the intermediate layer.

[11] With regard to the [9] or [10], it is preferable that the content proportion (mol%) of the other dicarboxylic acid component included in the intermediate layer is equal to or higher than the content proportion (mol%) of the other dicarboxylic acid component included in the outermost layer.

[12] With regard to any one of the items [9] to [11], it is preferable that the intermediate layer is a single layer.

[13] With regard to the item [12], it is preferable that a difference between a proportion of a total content of the other dicarboxylic acid component of the sealing layer and a proportion of a total content of the other dicarboxylic acid component of the intermediate layer is 1 mol% to 20 mol%.

[14] With regard to the item [12] or [13], it is preferable that a difference between the proportion of the total content of the other dicarboxylic acid component of the intermediate layer and the proportion of the total content of the other dicarboxylic acid component of the outermost layer is 0 mol% to 17 mol%.

[15] With regard to any one of the items [4] to [14], it is preferable that the intermediate layer includes homopolyethylene terephthalate.

[16] With regard to any one of the items [1] to [15], it is preferable that the other dicarboxylic acid component includes isophthalic acid and/or sebacic acid.

[17] With regard to any one of the items [1] to [16], it is preferable that the outermost layer includes inorganic particles.

[18] With regard to the item [3], it is preferable that the outermost layer includes homopolyethylene terephthalate.

[19] With regard to any one of the items [1] to [18], it is preferable that polyester-based sealant film has a barrier layer on the outermost layer.

[20] A fourth aspect of the present invention is a packaging material having the polyester-based sealant film according to any one of the items [1] to [19].

[21] A fifth aspect of the present invention is a laminated body having the polyester-based sealant film according to any one of the items [1] to [19] as at least one layer.

[22] A sixth aspect of the present invention is a packaging material having the laminated body according to the [21] in at least a portion.

EFFECT OF THE INVENTION

The polyester-based sealant film of the present invention has sufficient mechanical characteristics such as low shrinkability, breaking strength, and piercing strength necessary for sealant use.

In addition, the polyester-based sealant film of the present invention has highly excellent heat seal strength.

Therefore, the polyester-based sealant film of the present invention can be suitably used as a packaging material.

MODE(S) FOR CARRYING OUT THE INVENTION

Hereinafter, exemplary embodiments of the present invention will be described. However, the present invention is not intended to be limited to the embodiments that will be described next.

<Present sealant film>

The polyester-based sealant films of the first to third aspects according to an example of the present invention (hereinafter, these will be collectively referred to as "present sealant film") are laminated films including a sealing layer and an outermost layer. An intermediate layer may be provided between the sealing layer and the outermost layer.

(First aspect)

The polyester-based sealant film of the first aspect (hereinafter, referred to as "first aspect sealant film") is a polyester-based sealant film which is a laminated film composed of at least two layers and having a sealing layer and an outermost layer, in which the sealing layer includes a copolymerized polyester formed from a copolymer of terephthalic acid as well as another dicarboxylic acid component and a diol component, the outermost layer includes homopolyethylene terephthalate as a main component, the laminated film has a lamination configuration in which the content proportion (mol%) of the other dicarboxylic acid component in each layer decreases from the sealing layer toward the outermost layer, and a heat seal strength obtainable when the sealing layers of the laminated films are sealed at 0.2 MPa for 1 second in the range of 140°C to 220°C is 25 N/15 mm or higher.

(Second aspect)

The polyester-based sealant film of the second aspect (hereinafter, referred to as "second aspect sealant film") is a polyester-based sealant film which is a laminated film composed of at least two layers and having a sealing layer and an outermost layer, in which the sealing layer includes a copolymerized polyester formed from a copolymer of terephthalic acid as well as another dicarboxylic acid component and a diol component, the outermost layer includes homopolyethylene terephthalate as a main component, the laminated film has a lamination configuration in which the content proportion (mol%) of the other dicarboxylic acid component in each layer decreases from the sealing layer toward the outermost layer, the thickness of the laminated film is less than 50 μm, and the heat seal strength obtainable when the sealing layers of the laminated films are sealed at 0.2 MPa for 1 second in the range of 140°C to 200°C is 25 N/15 mm or higher.

(Third aspect)

The polyester-based sealant film of the third aspect (hereinafter, referred to as "third aspect sealant film") is a polyester-based sealant film which is a laminated film composed of at least two layers and having a sealing layer and an outermost layer, in which each layer includes a copolymerized polyester formed from a copolymer of terephthalic acid as well as another dicarboxylic acid component and a diol component, the laminated film has a lamination configuration in which the content proportion (mol%) of the other dicarboxylic acid component in each layer decreases from the sealing layer toward the outermost layer, and the heat seal strength obtainable when the sealing layers of the laminated films are sealed at 0.2 MPa for 1 second in the range of 160°C to 200°C is higher than 25 N/15 mm.

In this manner, the present sealant film has a lamination configuration in which the content proportion (mol%) of the other dicarboxylic acid component in each layer sequentially decreases in the film thickness direction from the sealing layer toward the outermost layer.

With regard to the present sealant film, a method of applying a concentration gradient of the other dicarboxylic acid component in the film thickness direction is not particularly limited; however, a method of laminating, in the thickness direction, two or more kinds of layers having different contents of the other dicarboxylic acid component may be mentioned.

Incidentally, whether the present sealant film has a concentration gradient of the dicarboxylic acid component in the copolymerized polyester in the thickness of the film can be checked by means of, for example, the presence or absence of an inflection point in the concentration gradient of the dicarboxylic acid in the film thickness direction.

The inflection point can be examined by producing an obliquely cut plane of the film by using SAICAS (registered trademark) and obtaining negative secondary ion peak intensity data by using a time-of-flight secondary ion mass spectrometer TOF-SIMS.

The mechanism by which highly excellent heat seal strength can be achieved by applying a concentration gradient of the other dicarboxylic acid component in the film thickness direction of the present sealant film, is presumed as follows.

It is presumed that when the above-mentioned concentration gradient is applied, the crystal structures of adjacent layers become similar, and since the interaction between adjacent layers becomes stronger, delamination can be prevented as a result of an improvement in the adhesiveness between the layers.

On the other hand, when a concentration gradient is not applied in one direction, delamination is likely to occur between a layer containing the least amount of the other dicarboxylic acid component and an adjacent layer.

In addition, for example, when the polyester-based sealant film has a three-layered structure (layer A/layer B/layer C) in which layer A is a sealing layer, layer B is an intermediate layer, and layer C is an outermost layer, in a case where the magnitude correlation of the content of the other dicarboxylic acid component in each layer is such that layer A > layer B > layer C, force is smoothly propagated in the peeling process at the time of measuring the heat seal strength as compared with the case where layer A > layer B and layer B < layer C, and as a result, the present sealant film can obtain highly excellent heat seal strength.

The present sealant film may be an unstretched film (sheet) or a stretched film. Above all, it is preferable that the present sealant film is a stretched film that has been stretched uniaxially or biaxially. Among them, it is preferable that the present sealant film is a biaxially stretched film, from the viewpoint of being excellent in terms of the balance of mechanical characteristics and the planarity.

<Sealing layer>

The sealing layer is a layer containing copolymerized polyester A as a main component resin.
According to the present invention, the term main component resin means a resin having the largest content proportion among the resins constituting the layer. This main component resin may account for 50% by mass or more, especially 70% by mass or more, and most especially 80% by mass or more (including 100% by mass), among the resins constituting the layer.

The sealing layer may be such that the constituent resin is composed only of the copolymerized polyester A; however, it is preferable that the constituent resin includes resin B in addition to the copolymerized polyester A.

The case in which the sealing layer includes the copolymerized polyester A and the resin B will be described below.

(Copolymerized polyester A)

It is preferable that the copolymerized polyester A is a copolymerized polyester as a copolymer of terephthalic acid as well as another dicarboxylic acid component and a diol component.

Examples of the "other dicarboxylic acid component" include an aromatic dicarboxylic acid, an alicyclic dicarboxylic acid, an aliphatic dicarboxylic acid, and a polyfunctional acid.

Incidentally, regarding the "other dicarboxylic acid component", one kind thereof may be used alone, or two or more kinds thereof may be used in combination.

Above all, from the viewpoint of making it easier to soften the present sealant film, the "other dicarboxylic acid component" is preferably aromatic dicarboxylic acids such as isophthalic acid, 2,6-naphthalenedicarboxylic acid, and diphenyldicarboxylic acid; aliphatic dicarboxylic acids such as adipic acid, sebacic acid, dodecanedioic acid, eicosanoic acid, and derivatives thereof; alicyclic dicarboxylic acids such as 1,4-cyclohexanedicarboxylic acid, 1,2-cyclopentanedicarboxylic acid, and cyclooctanedicarboxylic acid; and dimer acids.

Above all, from the viewpoint of securing a desired heat seal strength, it is preferable that the present sealant film includes isophthalic acid and/or sebacic acid.

With regard to the copolymerized polyester A in the sealing layer, the proportion occupied by the "other dicarboxylic acid component" in the sum of the dicarboxylic acid components, namely, terephthalic acid and the "other dicarboxylic acid component" is preferably 15 mol% to 35 mol%, and it is more preferable that the proportion is especially 17 mol% or more and 33 mol% or less, and most especially 20 mol% or more and 30 mol% or less. Here, when two or more kinds of the "other dicarboxylic acid component" are used in combination, the proportion means the total amount of those compounds.

When the proportion of the "other dicarboxylic acid component" is in the above-described range, the present sealant film can secure high heat sealability.

The diol component is not particularly limited, and examples include aliphatic diols such as ethylene glycol, diethylene glycol, trimethylene glycol, tetramethylene glycol, pentamethylene glycol, hexamethylene glycol, octamethylene glycol, decamethylene glycol, neopentyl glycol, 2-ethyl-2-butyl-1,3-propanediol, polyethylene glycol, and polytetramethylene ether glycol.

Furthermore, in addition to those described above, 1,4-butanediol, 1,6-hexanediol, diethylene glycol, trimethylene glycol, neopentyl glycol, 1,4-cyclohexanedimethanol, bisphenol, and derivatives thereof may also be used.

Regarding these diol components, one kind or two or more kinds thereof can be used, and above all, a combination of ethylene glycol and another alcohol component (for example, the above-mentioned diol component) is preferred.

Generally, when a polyester is produced (polycondensed) by using ethylene glycol as one of the raw materials, a portion of ethylene glycol is modified into diethylene glycol and is introduced into the polyester skeleton. This diethylene glycol is referred to as byproduct diethylene glycol, and although the amount of byproduct varies depending on the mode of polycondensation (transesterification method or direct polycondensation) or the like, the amount of byproduct is about 1 mol% to 5 mol% of ethylene glycol. According to the present invention, it should be noted that diethylene glycol that is by-produced from ethylene glycol as such is also included in the "other alcohol component".

As the copolymerized polyester A that is particularly preferred among those described above, copolymerized polyester Aa, which is a copolymer of terephthalic acid, isophthalic acid and/or sebacic acid and ethylene glycol as well as diethylene glycol, and in which the proportion occupied by isophthalic acid and/or sebacic acid in the dicarboxylic acid component constituting the copolymerized polyester is 15 mol% or more and 35 mol% or less, and the proportion occupied by diethylene glycol in the diol component constituting the copolymerized polyester is 0 mol% or more and 5 mol% or less, may be mentioned.

(Resin B)

As mentioned above, the sealing layer may be a layer including copolymerized polyester A and resin B.

Furthermore, from the viewpoint of enhancing an affinity with other layers, it is preferable that the sealing layer includes one kind or two or more kinds of polyesters as the resin B.

Regarding this polyester (including one kind or two or more kinds of polyesters), a polyester which includes terephthalic acid as well as the "other dicarboxylic acid component" as dicarboxylic acid components and a diol component, and in which the proportion of the total content of the "other dicarboxylic acid component" with respect to the total content of all the dicarboxylic acid components (in a case where two or more kinds of polyesters are included, the sum of the dicarboxylic acid components included in each polyester) is 0 mol% or more and 15 mol% or less, especially preferably 0 mol% or more and 10 mol% or less, and most especially preferably 0 mol% or more and 5 mol% or less, may be mentioned.

When the proportion of the "other dicarboxylic acid component" is in the above-described range, delamination of the present sealant film can be prevented.

Incidentally, when the polyester includes ethylene glycol and another alcohol component as the diol component, the proportion of the total content of the "other alcohol component" with respect to the total content of the diol component (in a case where two or more kinds of polyesters are included, the sum of the diol components included in each polyester) is 0 mol% or more and 5 mol% or less, especially preferably 1 mol% or more and 5 mol% or less, and most especially preferably 1 mol% or more and 4 mol% or less.

Incidentally, when two or more kinds of the "other alcohol component" are used in combination, the total content means the total amount of those compounds, and the "other alcohol component" includes byproduct diethylene glycol as described above.

The polyester constituting the resin B as such may be a copolymerized polyester including the "other dicarboxylic acid component" or may be a homopolyester that does not contain the "other dicarboxylic acid component". Among them, from the viewpoints of heat resistance and film strength, it is preferable that the resin B is homopolyethylene terephthalate.

Incidentally, the homopolyethylene terephthalate in this case also includes 1 mol% to 5 mol% of byproduct diethylene glycol.

The mass proportion of the copolymerized polyester A and the resin B in the sealing layer is preferably 70:30 to 95:5, and more preferably 75:25 to 93:7, and it is even more preferable that the mass proportion is especially 75:25 to 90:10, and most especially 80:20 to 90:10.

Therefore, when the sealing layer contains one kind or two or more kinds of polyesters, with regard to the total amount of components of all the polyesters included in the sealing layer, it is preferable that the proportion occupied by the total content of the "other dicarboxylic acid component" in the total content of the dicarboxylic acid components is 15 mol% or more and 30 mol% or less.

Incidentally, the content of the diol component is not particularly limited; however, when the polyester includes ethylene glycol and another alcohol component as the diol components, the proportion occupied by the total content of the "other alcohol component" in the total content of the diol components is preferably 0 mol% or more and 5 mol% or less.

Furthermore, when two or more kinds of the "other alcohol component" are used in combination, the total content means the total amount of those compounds, and the "other alcohol component" includes byproduct diethylene glycol as described above.

At this time, the proportion occupied by the total content of the "other dicarboxylic acid component" in the total content of the dicarboxylic acid components is preferably 15 mol% to 30 mol%, and it is more preferable that the proportion is especially 15 mol% or more and 28 mol% or less, and most especially 15 mol% or more and 25 mol% or less. Here, when two or more kinds of the "other dicarboxylic acid component" are used in combination, the total content means the total amount of those compounds.

Inorganic particles may be incorporated into the sealing layer.

By incorporating inorganic particles into the sealing layer, easy slidability is imparted, and scratch generation in each step is prevented.

Examples of the inorganic particles include silica, calcium carbonate, magnesium carbonate, barium carbonate, calcium sulfate, calcium phosphate, magnesium phosphate, kaolin, aluminum oxide, and titanium oxide.

Although the content of the inorganic particles is not particularly limited, it is preferable to incorporate the inorganic particles into the sealing layer at a proportion of 0% by mass to 0.5% by mass, particularly preferably 0% by mass to 0.4% by mass, and more preferably 0% by mass to 0.3% by mass.

<Outermost layer>

The present sealant film is a laminated film including an outermost layer on one surface of the sealing layer as described above. The outermost layer is a layer that becomes the outer side surface when the present sealant film is used as a packaging material or the like.

(First or second aspect)

With regard to the first or second aspect sealant film, the outermost layer is a layer containing homopolyethylene terephthalate as a main component resin. As the outermost layer contains homopolyethylene terephthalate as a main component resin, satisfactory heat resistance can be obtained.

Incidentally, the homopolyethylene terephthalate in this case also includes 1 mol% to 5 mol% of byproduct diethylene glycol.

With regard to the outermost layer, the constituent resin may be composed only of homopolyethylene terephthalate or may include resin B in addition to homopolyethylene terephthalate; however, from the viewpoint of heat resistance, it is preferable that the constituent resin is composed only of homopolyethylene terephthalate.

(Third aspect)

With regard to the third aspect sealant film, the outermost layer contains the above-described copolymerized polyester A, while the content proportion (mol%) of the other dicarboxylic acid component is lower than that of the sealing layer.

That is, with regard to the copolymerized polyester A in the outermost layer, the proportion occupied by the "other dicarboxylic acid component" in the sum of the dicarboxylic acid components, namely, terephthalic acid and the "other dicarboxylic acid component", is preferably 15 mol% to 35 mol%, and it is more preferable that the proportion is especially 17 mol% or more and 33 mol% or less, and most especially 20 mol% or more and 30 mol% or less. Here, when two or more kinds of the "other dicarboxylic acid component" are used in combination, the proportion means the total amount of those compounds.

With regard to the copolymerized polyester A in the outermost layer of the third aspect sealant film, the content of the diol component is not particularly limited; however, when the copolymerized polyester A includes ethylene glycol and another alcohol component as the diol component, the proportion occupied by the "other alcohol component" in the sum of the diol components, namely, ethylene glycol and the "other alcohol component", is preferably 0 mol% or more and 5 mol% or less, especially preferably 1 mol% or more and 5 mol% or less, and most especially preferably 1 mol% or more and 4 mol% or less.

Incidentally, when two or more kinds of the "other alcohol component" are used in combination, the proportion means the total amount of those compounds, and the "other alcohol component" includes byproduct diethylene glycol as described above.

As a particularly preferred copolymerized polyester A in the outermost layer of the third aspect sealant film, the above-described copolymerized polyester Aa which is a copolymer of terephthalic acid, isophthalic acid, and/or sebacic acid and ethylene glycol as well as diethylene glycol, and in which the proportion occupied by isophthalic acid and/or sebacic acid in the dicarboxylic acid component constituting the copolymerized polyester is 15 mol% or more and 35 mol% or less, while the proportion occupied by diethylene glycol in the alcohol component constituting the copolymerized polyester is 0 mol% or more and 5 mol% or less, may be mentioned.

With regard to the outermost layer of the third aspect sealant film, the constituent resin may be composed only of the copolymerized polyester A; however, it is preferable that the constituent resin includes resin B in addition to the copolymerized polyester A.

Furthermore, the first or second aspect sealant film may include one kind or two or more kinds of polyesters as the resin B in the outermost layer, and it is preferable that the third aspect sealant film includes one kind or two or more kinds of polyesters as the resin B in the outermost layer.

Regarding this polyester (including one kind or two or more kinds of polyesters), a polyester which includes terephthalic acid as well as the "other dicarboxylic acid component" as dicarboxylic acid components and a diol component, and in which the proportion of the total content of the "other dicarboxylic acid component" with respect to the total content of all the dicarboxylic acid components (in a case where two or more kinds of polyesters are included, the sum of the dicarboxylic acid components included in each polyester) is 0 mol% or more and 15 mol% or less, especially preferably 0 mol% or more and 10 mol% or less, and most especially preferably 0 mol% or more and 5 mol% or less, may be mentioned.

Incidentally, when the polyester includes ethylene glycol and another alcohol component as the diol components, the proportion of the total content of the "other alcohol component" with respect to the total content of the diol component (in a case where two or more kinds of polyesters are included, the sum of the diol components included in each polyester) is preferably 0 mol% or more and 5 mol% or less, especially preferably 1 mol% or more and 5 mol% or less, and most especially preferably 1 mol% or more and 4 mol% or less.

Incidentally, when two or more kinds of the "other alcohol component" are used in combination, the total content means the total amount of those compounds, and the "other alcohol component" includes byproduct diethylene glycol as described above.

The polyester that constitutes the resin B as such may be a copolymerized polyester including the "other dicarboxylic acid component" or may be a homopolyester that does not contain the "other dicarboxylic acid component".

Above all, with regard to the third aspect sealant film, it is preferable that the resin B is homopolyethylene terephthalate from the viewpoints of heat resistance and film strength. Incidentally, the homopolyethylene terephthalate in this case also includes 1 mol% to 5 mol% of byproduct diethylene glycol.

In the outermost layer of the first or second aspect sealant film, the mass proportion of the homopolyethylene terephthalate and the resin B is preferably 90:10 to 100:0, and it is more preferable that the mass proportion is especially 95:5 to 100:0, and most especially 98:2 to 100:0.

In the outermost layer of the third aspect sealant film, the mass proportion of the copolymerized polyester A and the resin B is preferably 10:90 to 70:30, and it is more preferable that the mass proportion is especially 15:85 to 65:35, and most especially 15:85 to 60:40.

Therefore, in a case where the outermost layer contains one kind or two or more kinds of polyesters, with regard to the total amount of components of all the polyesters included in the outermost layer, the proportion occupied by the total content of the "other dicarboxylic acid component" in the total content of the dicarboxylic acid components is preferably 0 mol% or more and 5 mol% or less for the first or second aspect sealant film, and the proportion is preferably 3 mol% or more and 15 mol% or less for the third aspect sealant film.

Incidentally, the content of the diol component is not particularly limited; however, when the polyester includes ethylene glycol and another alcohol component as the diol components, the proportion occupied by the total content of the "other alcohol component" in the total content of the diol components is preferably 0 mol% or more and 5 mol% or less.

Furthermore, when two or more kinds of the "other alcohol component" are used in combination, the total content means the total amount of those compounds, and the "other alcohol component" includes byproduct diethylene glycol as described above.

At this time, the proportion occupied by the total content of the "other dicarboxylic acid component" in the total content of the dicarboxylic acid components is preferably 0 mol% to 5 mol% for the first or second aspect sealant film, and it is more preferable that the proportion is especially 0 mol% or more and 4 mol% or less, and most especially 0 mol% or more and 3 mol% or less. For the third aspect of the sealant film, the proportion is preferably 3 mol% to 15 mol%, and it is more preferable that the proportion is especially 4 mol% or more and 14 mol% or less, and most especially 5 mol% or more and 13 mol% or less. Here, when two or more kinds of the "other dicarboxylic acid component" are used in combination, the proportion means the total amount of those compounds.

Inorganic particles may be incorporated into the outermost layer.

By incorporating inorganic particles into the outermost layer, easy slidability is imparted, and scratch generation in each step is prevented.

Examples of the inorganic particles include silica, calcium carbonate, magnesium carbonate, barium carbonate, calcium sulfate, calcium phosphate, magnesium phosphate, kaolin, aluminum oxide, and titanium oxide.

Although the content of the inorganic particles is not particularly limited, it is preferable to incorporate the inorganic particles into the outermost layer at a proportion of 0% by mass to 0.5% by mass, particularly preferably 0% by mass to 0.4% by mass, and more preferably 0% by mass to 0.3% by mass.

<Intermediate layer>

In the present sealant film, as described above, an intermediate layer composed of at least one layer may be provided between the sealing layer and the outermost layer. The intermediate layer may be a single layer but may be composed of a plurality of layers such as two layers, three layers, or four layers.

It is preferable that the intermediate layer contains the above-described copolymerized polyester A.

(First or second aspect)

With regard to the first or second aspect sealant film, when an intermediate layer is further provided, it is preferable that the content proportion (mol%) of the other dicarboxylic acid component is set to be lower than that in the sealing layer, and the content proportion (mol%) of the other dicarboxylic acid component is set to be higher than that in the outermost layer.

When a plurality of intermediate layers are provided, a lamination arrangement in which the content proportion (mol%) of the other dicarboxylic acid component in the film thickness direction is sequentially lowered from the sealing layer toward the outermost layer, is adopted.

(Third aspect)

With regard to the third aspect sealant film, when an intermediate layer is further provided, it is preferable that the content proportion (mol%) of the other dicarboxylic acid component in the sealing layer is set to be higher than that in the intermediate layer. Furthermore, it is preferable that the content proportion (mol%) of the other dicarboxylic acid component in the intermediate layer is set to be equal to or higher than that in the outermost layer.

When a plurality of intermediate layers are provided, a lamination arrangement in which the content proportion (mol%) of the other dicarboxylic acid component in each layer decreases in the thickness direction from the sealing layer toward the outermost layer is adopted, and adjacent intermediate layers may have the same content proportions.

With regard to the present sealant film, the intermediate layer may be such that the constituent resin is composed only of the copolymerized polyester A; however, it is preferable that the constituent resin includes resin B in addition to the copolymerized polyester A.

With regard to the copolymerized polyester A in the intermediate layer, the proportion occupied by the "other dicarboxylic acid component" in the sum of the dicarboxylic acid components, namely, terephthalic acid and the "other dicarboxylic acid component", is preferably 15 mol% to 35 mol%, and it is more preferable that the proportion is especially 17 mol% or more and 33 mol% or less, and most especially 20 mol% or more and 30 mol% or less. Here, when two or more kinds of the "other dicarboxylic acid component" are used in combination, the proportion means the total amount of those compounds.

With regard to the copolymerized polyester A in the intermediate layer, the content of the diol component is not particularly limited; however, when the copolymerized polyester A includes ethylene glycol and another alcohol component as the diol components, the proportion occupied by the "other alcohol component" in the sum of the diol components, namely, ethylene glycol and the "other alcohol component", is preferably 0 mol% or more and 5 mol% or less, especially preferably 1 mol% or more and 5 mol% or less, and most especially preferably 1 mol% or more and 4 mol% or less.

Incidentally, when two or more kinds of the "other alcohol component" are used in combination, the proportion means the total amount of those compounds, and the "other alcohol component" includes byproduct diethylene glycol as described above.

As a particularly preferred copolymerized polyester A in the intermediate layer, the above-described copolymerized polyester Aa which is a copolymer of terephthalic acid, isophthalic acid, and/or sebacic acid and ethylene glycol as well as diethylene glycol, and in which the proportion occupied by isophthalic acid and/or sebacic acid in the dicarboxylic acid components constituting the copolymerized polyester is 15 mol% or more and 35 mol% or less, while the proportion occupied by diethylene glycol in the alcohol components constituting the copolymerized polyester is 0 mol% or more and 5 mol% or less, may be mentioned.

Furthermore, it is preferable that the resin B in the intermediate layer includes one kind or two or more kinds of polyesters.

Regarding this polyester (including one kind or two or more kinds of polyesters), a polyester which includes terephthalic acid and the "other dicarboxylic acid component" as the dicarboxylic acid components and a diol component, and in which the proportion of the total content of the "other dicarboxylic acid component" with respect to the total content of all the dicarboxylic acid components (in a case where two or more kinds of polyesters are included, the sum of the dicarboxylic acid components included in each polyester) is 0 mol% or more and 15 mol% or less, especially preferably 0 mol% or more and 10 mol% or less, and most especially preferably 0 mol% or more and 5 mol% or less, may be mentioned.

Incidentally, When the polyester includes ethylene glycol and another alcohol component as the diol components, the proportion of the total content of the "other alcohol component" with respect to the total content of the diol components (in a case where two or more kinds of polyesters are included, the sum of the alcohol components included in each polyester) is preferably 0 mol% or more and 5 mol% or less, especially preferably 1 mol% or more and 5 mol% or less, and most especially preferably 1 mol% or more and 4 mol% or less.

Incidentally, when two or more kinds of the "other alcohol component" are used in combination, the proportion means the total amount of those compounds, and the "other alcohol component" includes byproduct diethylene glycol as described above.

The polyester constituting the resin B as such may be a copolymerized polyester including the "other dicarboxylic acid component" or may be a homopolyester that does not contain the "other dicarboxylic acid component". Above all, from the viewpoints of heat resistance and film strength, it is preferable that the resin B is homopolyethylene terephthalate. Incidentally, the homopolyethylene terephthalate in this case also includes 1 mol% to 5 mol% of byproduct diethylene glycol.

With regard to the intermediate layer, the mass proportion of the copolymerize polyester A and the resin B is preferably 30:70 to 70:30, and it is more preferable that the mass proportion is especially 40:60 to 60:40, and most especially 45:55 to 55:45.

Therefore, when the intermediate layer contains one kind or two or more kinds of polyesters, with regard to the total amount of components of all the polyesters included in the intermediate layer, the proportion occupied by the total content of the "other dicarboxylic acid component" in the total content of the dicarboxylic acid components is preferably 10 mol% or more and 20 mol% or less.

Incidentally, the content of the diol component is not particularly limited; however, when the polyester includes ethylene glycol and another alcohol component as the diol components, the proportion occupied by the total content of the "other alcohol component" in the total content of the diol components is preferably 0 mol% or more and 5 mol% or less.

Furthermore, when two or more kinds of the "other alcohol component" are used in combination, the proportion means the total amount of those compounds, and the "other alcohol component" includes byproduct diethylene glycol as described above.

At this time, the proportion occupied by the total content of the "other dicarboxylic acid component" in the total content of the dicarboxylic acid components is preferably 10 mol% to 20 mol%, and it is more preferable that the proportion is especially 10 mol% or more and 19 mol% or less, and most especially 10 mol% or more and 18 mol% or less. Here, when two or more kinds of the "other dicarboxylic acid component" are used in combination, the proportion means the total amount of those compounds.

<Particularly preferred embodiment>

(First or second aspect)

With regard to the first or second aspect sealant film, as described above, when the sealing layer includes copolymerized polyester A and resin B, the proportion occupied by the total content of the "other dicarboxylic acid component" in the total content of the dicarboxylic acid components is preferably 15 mol% to 30 mol%, and it is more preferable that the proportion is especially 15 mol% or more and 28 mol% or less, and most especially 15 mol% or more and 25 mol% or less.

Furthermore, as described above, with regard to the intermediate layer, the proportion occupied by the total content of the "other dicarboxylic acid component" in the total content of the dicarboxylic acid components is preferably 10 mol% to 20 mol%, and it is more preferable that the proportion is especially 10 mol% or more and 19 mol% or less, and most especially 10 mol% or more and 18 mol% or less.

In addition, as described above, with regard to the outermost layer, the proportion occupied by the total content of the "other dicarboxylic acid component" in the total content of the dicarboxylic acid components is preferably 0 mol% to 5 mol%, and it is more preferable that the proportion is especially 0 mol% or more and 4 mol% or less, and most especially 0 mol% or more and 3 mol% or less.

In addition, as described above, when an intermediate layer is further provided, it is preferable that the content proportion (mol%) of the other dicarboxylic acid component is set to be lower than that in the sealing layer, and the content proportion (mol%) of the other dicarboxylic acid component is set to be higher than that in the outermost layer.

Therefore, when an intermediate layer is further provided, that is, when the first or second aspect sealant film has three layers of sealing layer/intermediate layer/outermost layer, the difference between the proportion of the total content of the "other dicarboxylic acid component" in the sealing layer and the total content of the "other dicarboxylic acid component" in the intermediate layer may be 1 mol% to 20 mol%, especially preferably 3 mol% or more and 16 mol% or less, and most especially preferably 5 mol% or more and 12 mol% or less. Furthermore, the difference between the proportion of the total content of the "other dicarboxylic acid component" in the intermediate layer and the total content of the "other dicarboxylic acid component" in the outermost layer may be 5 mol% to 20 mol%, especially preferably 7 mol% or more and 18 mol% or less, and most especially preferably 10 mol% or more and 17 mol% or less.

(Third aspect)

With regard to the third aspect sealant film, as described above, when the sealing layer includes copolymerized polyester A and resin B, the proportion occupied by the total content of the "other dicarboxylic acid component" in the total content of the dicarboxylic acid components is preferably 15 mol% to 30 mol%, and it is more preferable that the proportion is especially 15 mol% or more and 28 mol% or less, and most especially 15 mol% or more and 25 mol% or less.

Furthermore, as described above, with regard to the intermediate layer, the proportion occupied by the total content of the "other dicarboxylic acid component" in the total content of the dicarboxylic acid components is preferably 10 mol% to 20 mol%, and it is more preferable that the proportion is especially 10 mol% or more and 19 mol% or less, and most especially 10 mol% or more and 18 mol% or less.

In addition, as described above, with regard to the outermost layer, the proportion occupied by the total content of the "other dicarboxylic acid component" in the total content of the dicarboxylic acid components is preferably 3 mol% to 15 mol%, and it is more preferable that the proportion is especially 4 mol% or more and 14 mol% or less, and most especially 5 mol% or more and 13 mol% or less.

In addition, as described above, when an intermediate layer is further provided, it is preferable that the content proportion (mol%) of the other dicarboxylic acid component in the sealing layer is set to be higher than that in the intermediate layer. Furthermore, it is preferable that the content proportion (mol%) of the other dicarboxylic acid component in the intermediate layer is set to be equal to or higher than that in the outermost layer.

Therefore, when one intermediate layer is further provided, that is, when the third aspect sealant film has three layers of sealing layer/intermediate layer/outermost layer, the difference between the proportion of the total content of the "other dicarboxylic acid component" of the sealing layer and the total content of the "other dicarboxylic acid component" of the intermediate layer may be 1 mol% to 20 mol%, especially preferably 3 mol% or more and 16 mol% or less, and most especially preferably 5 mol% or more and 12 mol% or less. Furthermore, the difference between the proportion of the total content of the "other dicarboxylic acid component" of the intermediate layer and the total content of the "other dicarboxylic acid component" of the outermost layer may be 0 mol% to 17 mol%, especially preferably 0 mol% or more and 12 mol% or less, and most especially preferably 0 mol% or more and 7 mol% or less.

<Other layers>

A barrier layer may be provided on the outermost layer.

Furthermore, the present sealant film may have another layer between the outermost layer and the barrier layer.

The barrier layer is a layer capable of improving a property of suppressing gas permeation (also referred to as "gas barrier properties"), particularly water vapor barrier properties.

Regarding an inorganic substance as a main material constituting the present barrier layer, for example, one kind or two or more kinds of inorganic compounds selected from the group consisting of silicon oxide, silicon nitride, silicon oxynitride, silicon oxycarbide, silicon oxycarbide nitride, aluminum oxide, aluminum nitride, aluminum oxynitride, and aluminum oxycarbide may be mentioned.

The present barrier layer is preferably, for example, a PVD inorganic substance layer formed by a physical vapor deposition (PVD) method, a plasma assisted vapor deposition inorganic substance layer formed by a plasma assisted vapor deposition method, a CVD inorganic substance layer formed by a chemical vapor deposition (CVD) method, or a coated inorganic substance layer formed by a method of dispersing inorganic particles in an organic polymer and applying the dispersion.

The present barrier layer may have a single layer configuration, or a multilayer configuration of two or more layers.

For example, as an example of the multilayer configuration of two or more layers, an example of forming one of the layers as an inorganic substance layer formed only from an inorganic substance, for example, an inorganic oxide, and forming another one layer as an inorganic-organic mixed layer formed from an inorganic substance, for example, an inorganic oxide, and an organic substance, may be mentioned.

Since a relatively flexible layer can be obtained by mixing an inorganic substance with an organic substance, there are occasions in which the gas barrier properties can be improved by providing such a flexible layer. That is, coarse protrusions of the base material film serve as starting points, and minute defects called pinholes may be generated on the surface of the inorganic substance layer, or the raw materials may fly in lumps during heating and vapor deposition and adhere to the surface of the inorganic substance layer causing minute defects on the surface of the inorganic substance layer, so that as gas passes through voids produced by these defects, the gas barrier properties may be deteriorated. Thus, there are occasions in which the defects can be embedded by repeatedly laminating flexible layers such as described above on the surface, and the gas barrier properties can be improved.

The thickness of the present barrier layer (in a case where the inorganic substance layer has a multilayer configuration, the total thickness of those layers) is preferably 0.1 nm to 500 nm, and it is more preferable that the thickness is especially 1 nm or more and 300 nm or less, and most especially 5 nm or more and 100 nm or less.

When the thickness of the present barrier layer is in the above-described range, it is possible to secure desired gas barrier properties.

<Thickness of present sealant film>

(First or third aspect)

With regard to the first or third aspect sealant film, the thickness is not particularly limited, and an appropriate thickness can be selected according to the use application.

From the viewpoint of securing high heat sealability and performing barrier vapor deposition and printing processing, the total thickness of the first or third aspect sealant film is preferably more than 3 $\mu$m, and it is more preferable that the thickness is especially 5 $\mu$m or more, and most especially 10 $\mu$m or more.

On the other hand, the upper limit of the total thickness of the first or third aspect sealant film is not particularly limited. The total thickness is preferably 200 $\mu$m or less, and it is more preferable that the total thickness is especially 160 $\mu$m or less, more especially 140 $\mu$m or less, and most especially 120 $\mu$m or less.

(Second aspect)

With regard to the second aspect sealant film, the thickness is less than 50 $\mu$m. From the viewpoint of improving the heat sealability, it is preferable that the thickness is larger; however, from the viewpoint of reducing the amount of disposal during recycling and from the viewpoint of production and processing efficiency, it is preferable that the thickness is smaller.

From such viewpoints, the thickness of the second aspect sealant film is preferably more than 3 μm, and it is more preferable that the thickness is especially 5 μm or more, and most especially 10 μm or more.

Furthermore, the upper limit of the thickness of the second aspect sealant film is less than 50 μm, preferably 45 μm or less, and more preferably 40 μm or less.

With regard to the present sealant film, the thickness of the sealing layer is not particularly limited; however, the thickness is preferably 1 μm to 15 μm, more preferably 3 μm to 12 μm, and even more preferably 5 μm to 10 μm.

The thickness of the outermost layer is not particularly limited; however, the thickness is preferably 1 μm to 15 μm, more preferably 3 μm to 12 μm, and even more preferably 5 μm to 10 μm.

The total thickness of the intermediate layer is not particularly limited; however, the total thickness is preferably 10 μm to 150 μm, more preferably 15 μm to 100 μm, and even more preferably 20 μm to 80 μm.

<Physical properties of present sealant film>

<Heat seal strength>

(First or second aspect)

The first aspect sealant film is preferably such that the heat seal strength obtainable when the first aspect sealant film is heat-sealed at 0.2 MPa for 1 second in the range of 140°C to 220°C is 25 N/15 mm or higher.

Furthermore, the second aspect sealant film is preferably such that the heat seal strength obtainable when the second aspect sealant film is heat-sealed at 0.2 MPa for 1 second in the range of 140°C to 200°C is 25 N/15 mm or higher.

Incidentally, the phrase "in the range of 140°C to 220°C and 140°C to 200°C" as used herein means "at any temperature in this range". When the sealant film has high heat seal strength even in a high temperature range of 180°C or higher, the sealant film can be suitably used for high temperature sterilization of retort food products and the like as well.

As the heat seal strength is 25 N/15 mm or higher, for example, when the sealant film is used as a packaging material, the sealant film can contribute to the improvement of airtight sealability and can also be used for use applications such as heavy weight applications and antibacterial applications.

From such viewpoints, it is preferable that the first or second aspect sealant film has a heat seal strength of 26 N/15 mm or higher, and it is more preferable that the heat seal strength is especially 27 N/15 mm or higher, and most especially 28 N/15 mm or higher.

The upper limit value of the heat seal strength is not particularly limited; however, the heat seal strength is preferably 80 N/15 mm or lower, and it is more preferable that the heat seal strength is especially 75 N/15 mm or lower, and most especially 70 N/15 m or lower.

(Third aspect)

The third aspect sealant film is preferably such that the heat seal strength obtainable when the third aspect sealant film is heat-sealed at 0.2 MPa for 1 second in the range of 160°C to 200°C is higher than 25 N/15 mm.

Incidentally, the phrase "in the range of 160°C to 200°C" as used herein means "at any temperature in this range". When the sealant film has high heat seal strength even in a high temperature range of 160°C or higher, the sealant film can be suitably used for high temperature sterilization of retort food products and the like as well.

As the heat seal strength is higher than 25 N/15 mm, for example, when the sealant film is used as a packaging material, the sealant film can contribute to the improvement of airtight sealability and can also be used for use applications such as heavy weight applications and antibacterial applications.

From such viewpoints, it is preferable that the third aspect sealant film has a heat seal strength of 26 N/15 mm or higher, and it is more preferable that the heat seal strength is especially 27 N/15 mm or higher, and most especially 28 N/15 mm or higher.

The upper limit value of the heat seal strength is not particularly limited; however, the heat seal strength is preferably 80 N/15 mm or lower, and it is more preferable that the heat seal strength is especially 75 N/15 mm or lower, and most especially 70 N/15 mm or lower.

Furthermore, when the sealant film is heat-sealed at 0.2 MPa for 1 second in the range of 140°C or higher and lower than 160°C and/or higher than 200°C and 220°C or lower, the heat seal strength is preferably 15 N/15 mm or higher, more preferably 20 N/15 mm or higher, even more preferably 25 N/15 mm or higher, and particularly preferably 30 N/15 mm or higher.

Incidentally, the heat seal strength of the present sealant film can be measured by, for example, the method disclosed in the Examples that will be described below.

<Breaking strength>

The present sealant film is preferably such that the breaking strengths in the longitudinal direction (MD) and the width direction (TD) are both 50 MPa or higher.

As the breaking strength is in the range of 50 MPa or higher, for example, when the sealant film is used as a packaging material, breakage can be prevented.

From such viewpoints, it is preferable that the present sealant film has a breaking strength of 50 MPa or higher, and it is more preferable that the breaking strength is especially 60 MPa or higher, and most especially 65 MPa or higher. It is more preferable when the breaking strength is higher; however, even when the breaking strength is 150 MPa or lower, it is said to be practically sufficient.

Incidentally, the breaking strength can be measured by, for example, the method disclosed in the Examples that will be described below.

<Piercing strength>

It is preferable that the present sealant film has a piercing strength of 150 N/mm or higher.

As the piercing strength is in the range of 150 N/mm or higher, for example, when the sealant film is used as a packaging material, the piercing properties can be improved.

From such viewpoints, it is preferable that the present sealant film has a piercing strength of 150 N/mm or higher, and it is more preferable that the piercing strength is especially 155 N/mm or higher, and most especially 160 N/mm or higher. It is more preferable that the piercing strength is higher; however, even when the breaking strength is 250 N/mm or lower, it is said to be practically sufficient.

Incidentally, the piercing strength can be measured by, for example, the method disclosed in the Examples that will be described below.

<Shrinkage ratio>

The present sealant film is preferably such that the shrinkage ratios in the longitudinal direction (MD) and the width direction (TD) are both -5% to 5%.

As the shrinkage ratio is in the range of -5% to 5%, for example, the original shape can be maintained even in a high temperature environment.

From such viewpoints, it is preferable that the present sealant film has a shrinkage ratio of -5% to 5%, and it is more preferable that the shrinkage ratio is especially -4% to 4%, and most especially -3% to 3%.

Incidentally, the shrinkage can be measured by, for example, the method disclosed in the Examples that will be described below.

<Haze>

The present sealant film preferably has a haze of 1% to 15%.

As the haze is in the range of 1% to 15%, for example, when the sealant film is used as a packaging material, the content can be visually recognized. As the haze is lower, transparency increases, which is preferable; however, at the current technological level, the lower limit is 1%.

From such viewpoints, it is preferable that the present sealant film has a haze of 1% to 15%, and it is more preferable that the haze is especially 1% to 130, and most especially 1% to 10%.

Incidentally, the haze can be measured by, for example, the method disclosed in the Examples that will be described below.

<Method for producing present sealant film>

As an example of the method for producing the present sealant film, a case in which the present sealant film is a biaxially stretched film will be described. However, the production method is not limited to the production method described herein.

First, by using a known method, raw materials, for example, polyester chips may be supplied to a melt extrusion apparatus, heated to a temperature equal to or higher than the melting point of each polymer, the molten polymer may be extruded through a die and cooled and solidified on a rotating cooling drum to a temperature equal to or lower than the glass transition point of the polymer, and an unoriented sheet in a substantially amorphous state may be obtained.

Next, this unoriented sheet is stretched in one direction by a roll or tenter type stretching machine. At this time, the stretching temperature is usually 25°C to 120°C, and preferably 35°C to 100°C, and the stretching ratio is usually 2.5 to 7 times, and preferably 2.8 to 6 times.

Next, the resultant is stretched in a direction orthogonally intersecting the stretching direction of the first stage. At this time, the stretching temperature is usually 50°C to 140°C, and the stretching ratio is usually 3.0 to 7 times, and preferably 3.5 to 6 times.

Then, subsequently, a heat setting treatment is carried out at a temperature of 130°C to 270°C under tension or under a relaxation of 30% or less, and the present sealant film as a biaxially oriented film can be obtained.

Incidentally, for the stretching described above, a method of performing unidirectional stretching in two or more stages may be employed.

The present sealant film may be co-extruded and then subjected to stretching and a heat setting treatment as an integrated film, as described above.

With regard to the heat setting treatment at this time, when the copolymerized polyester A is crystalline, it is preferable that the heat setting treatment is carried out at a temperature higher than the melting point of the copolymerized polyester A.

<Use applications of present sealant film>

The present sealant film can be suitably used as a constituent member of a packaging material and the like.

The present sealant film may be used as it is as a packaging material, or a laminated body having the present sealant film as at least one layer may be produced, and a packaging material having this laminated body in at least a portion may be used.

<Description of terms, and the like>

According to the present invention, the term "film" shall include a "sheet", and the term "sheet" shall include a "film".

According to the present invention, in the case of description "X to Y" (X and Y are any numbers), unless particularly stated otherwise, the description includes the meaning of "X or more and Y or less" as well as the meaning of "preferably larger than X" or "preferably smaller than Y".

Furthermore, in the case of description "X or more" (X is any number), unless particularly stated otherwise, the description includes the meaning of "preferably larger than X", and in the case of description "Y or less" (Y is any number), unless particularly stated otherwise, the description also includes the meaning of "preferably smaller than Y".

EXAMPLES

Hereinafter, an example of the Examples of the present invention will be described. However, the present invention is not intended to be limited to the Examples that will be described below.

<Evaluation methods>

Measurement of heat seal strength

Heat seal strength was measured according to JIS Z1707. The sealing surfaces of films were joined together and heat-sealed at 0.2 MPa for 1 second at each temperature (140°C to 220°C) to form a sealed part, the sealed part was cut to have a width of 15 mm, and the peeling strength of the sealed part was measured with a tensile tester at a tensile rate of 300 mm/min.

Measurement of breaking strength

A sample film having a size of 1.5 cm × 15 cm was pulled at a rate of 200 mm/min by using a tensile tester, and the strength when the sample was cut (broken) (value obtained by dividing the tensile load value by the cross-sectional area of the test specimen) was designated as breaking strength (MPa).

Measurement of piercing strength

The piercing strength (N) was measured according to JIS Z1707, and a value obtained by dividing the piercing strength (N) by the film thickness was designated as unit piercing strength (N/mm).

Measurement of shrinkage ratio

A sample film having a size of 1.5 cm × 15 cm was heat-treated for 5 minutes in a tensionless state in a hot air type oven maintained at a predetermined temperature (100°C), the lengths of the sample film before and after the heat treatment were measured, and the shrinkage ratio was calculated as follows (Formula 1). Incidentally, the shrinkage ratio was measured in each of the longitudinal direction (MD) and the width direction (TD) of the film.

```
Shrinkage ratio (%) = {(Sample length before heat
treatment) - (sample length after heat treatment)} ÷
(sample length before heat treatment) × 100 ... (Formula 1)
```

Measurement of haze

The haze was measured according to JIS K7136 by using a haze meter DH-2000 manufactured by NIPPON DENSHOKU INDUSTRIES CO., LTD.

<Materials used>

[Adjustment of polyester raw materials]

The composition of each polyester used for the present invention is shown in Table 1. In Table 1, TPA is terephthalic acid, IPA is isophthalic acid, EG is ethylene glycol, and DEG is diethylene glycol.
Incidentally, at the time of production of polyester B, $SiO_2$ (SL310 manufactured by FUJI SILYSIA CHEMICAL LTD.) as a lubricating agent was added to the polyester at a proportion of 6000 ppm.

[Table 1]

| Polyester raw material | Raw material composition of polyester (mol%) | | | | Amount of addition of lubricating agent (ppm) |
| | Dicarboxylic acid component | | Diol component | | |
| | TPA | IPA | EG | DEG | |
| A | 100 | 0 | 96 | 4 | 0 |
| B | 100 | 0 | 98 | 2 | 6000 |
| C | 76 | 24 | 97 | 3 | 0 |

<First or second aspect>

(Example 1-1)

Polyester A and polyester B were mixed at a mass ratio of 50:50 as a raw material of an outermost layer, polyester A and polyester C were mixed at a mass ratio of 50:50 as a raw material of an intermediate layer, and polyester B and polyester C were mixed at a mass ratio of 15:85 as a raw material of a sealing layer.
The respective mixed raw materials of the outermost layer, the intermediate layer, and the sealing layer were introduced into separate twin-screw extruders, and the mixed raw materials of the outermost layer and the intermediate layer were melted at 280°C, while the mixed raw material of the sealing layer was melted at 270°C.
Each of the raw materials was co-extruded onto a cooling roll set at 15°C to be cooled and solidified, and thus, three kinds of unstretched laminated films of three layers (outermost layer/intermediate layer/sealing layer) were obtained.
Next, the obtained unstretched laminated film was stretched 3.3 times in the longitudinal direction (MD) at 85°C with a roll stretching machine. Furthermore, the film was preheated to 95°C in a tenter and then stretched 4.2 times in the width direction (TD) at 110°C. Lastly, the film was subjected to a heat treatment at 225°C, and a laminated film having a thickness of 36 μm (outermost layer: 5 μm, intermediate layer: 26 μm, sealing layer: 5 μm) was obtained.
The characteristics of the obtained laminated film were evaluated by the above-described methods. The evaluation results are presented in Table 2.

(Example 1-2)

A laminated film having a thickness of 50 $\mu$m (outermost layer: 7 $\mu$m, intermediate layer: 36 $\mu$m, sealing layer: 7 $\mu$m) was obtained by adopting the same raw material mass ratio and film-forming conditions for each layer as in Example 1-1. The evaluation results are presented in Table 2.

(Example 1-3)

A laminated film having a thickness of 75 $\mu$m (outermost layer: 10 $\mu$m, intermediate layer: 55 $\mu$m, sealing layer: 10 $\mu$m) was obtained by adopting the same raw material mass ratio and film-forming conditions for each layer as in Example 1-1. The evaluation results are presented in Table 2.

(Example 1-4)

Polyester A and polyester C were mixed at a mass ratio of 40:60 as a raw material of the intermediate layer. A laminated film having a thickness of 75 $\mu$m (outermost layer: 10 $\mu$m, intermediate layer: 55 $\mu$m, sealing layer: 10 $\mu$m) was obtained by adopting the same raw material mass ratio and film-forming conditions for each layer other than the intermediate layer as in Example 1-1. The evaluation results are presented in Table 2.

(Example 1-5)

A laminated film having a thickness of 75 $\mu$m (outermost layer: 5 $\mu$m, intermediate layer: 60 $\mu$m, sealing layer: 10 $\mu$m) was obtained by adopting the same raw material mass ratio and film-forming conditions for each layer as in Example 1-1. The evaluation results are presented in Table 2.

(Example 1-6)

Polyester A and polyester C were mixed at a mass ratio of 52:48 as a raw material of the intermediate layer, and polyester B and polyester C were mixed at a mass ratio of 7:93 as a raw material of the sealing layer. A laminated film having a thickness of 75 $\mu$m (outermost layer: 14 $\mu$m, intermediate layer: 47 $\mu$m, sealing layer: 14 $\mu$m) was obtained by adopting the same raw material mass ratio and film-forming conditions for each layer other than the intermediate layer as in Example 1-1. The evaluation results are shown in Table 2.

(Example 1-7)

A laminated film having a thickness of 49.9 $\mu$m (outermost layer: 9.3 $\mu$m, intermediate layer: 31.3 $\mu$m, sealing layer: 9.3 $\mu$m) was obtained by adopting the same raw material mass ratio and film-forming conditions for each layer as in Example 1-6. The evaluation results are presented in Table 2.

(Example 1-8)

A laminated film having a thickness of 38 $\mu$m (outermost layer: 7 $\mu$m, intermediate layer: 24 $\mu$m, sealing layer: 7 $\mu$m) was obtained by adopting the same raw material mass ratio and film-forming conditions for each layer as in Example 1-6. The evaluation results are presented in Table 2.

(Comparative Example 1-1)

As a raw material of the intermediate layer, only polyester A was used. A laminated film having a thickness of 75 $\mu$m (outermost layer: 5 $\mu$m, intermediate layer: 60 $\mu$m, sealing layer: 10 $\mu$m) was obtained by adopting the same raw material mass ratio and film-forming conditions for each layer other than the intermediate layer as in Example 1-1. The evaluation results are presented in Table 2.

[Table 2]

| | | Example 1-1 | Example 1-2 | Example 1-3 | Example 1-4 | Example 1-5 | Example 1-6 | Example 1-7 | Example 1-8 | Comparative Example 1-1 |
|---|---|---|---|---|---|---|---|---|---|---|
| Thickness (μm) | Outermost layer | 5 | 7 | 10 | 10 | 5 | 14 | 9.3 | 7 | 5 |
| | Intermediate layer | 26 | 36 | 55 | 55 | 60 | 47 | 31.3 | 24 | 60 |
| | Sealing layer | 5 | 7 | 10 | 10 | 10 | 14 | 9.3 | 7 | 10 |
| | Total thickness | 36 | 50 | 75 | 75 | 75 | 75 | 49.9 | 38 | 75 |
| Other dicarboxylic acid component (mol%) | Outermost layer | 0 | 0 | 0 | 0 | 0 | 0 | 0 | 0 | 0 |
| | Intermediate layer | 12 | 12 | 12 | 14 | 12 | 11 | 11 | 11 | 0 |
| | Sealing layer | 20 | 20 | 20 | 20 | 20 | 22 | 22 | 22 | 20 |
| Heat seal strength (N/15 mm) | 140°C | 29 | 40 | 33 | 29 | 38 | 25 | 41 | 34 | 13 |
| | 160°C | 31 | 38 | 38 | 58 | 50 | 43 | 45 | 35 | 12 |
| | 180°C | 25 | 39 | 61 | 56 | 53 | 45 | 35 | 28 | 11 |
| | 200°C | 28 | 26 | 65 | 34 | 58 | 52 | 37 | 27 | 12 |
| | 220°C | 31 | 33 | 63 | 27 | 68 | 49 | 37 | 22 | 12 |
| Breaking strength (MPa) | MD | 88 | 92 | 91 | 75 | 69 | 106 | 108 | 110 | 201 |
| | TD | 114 | 117 | 117 | 80 | 109 | 114 | 116 | 125 | 230 |
| Unit piercing strength (N/mm) | | 214 | 214 | 208 | 164 | 199 | 225 | 224 | 228 | 479 |
| Shrinkage ratio (%) | MD | 1.6 | 1.7 | 1.3 | 1.4 | 1.8 | 1.4 | 2.0 | 2.1 | 0.5 |
| | TD | -0.7 | -0.4 | -0.3 | -0.3 | -0.9 | -0.5 | -0.8 | -0.7 | 0.1 |
| Haze (%) | | 4.3 | 5.0 | 5.7 | 5.6 | 5.3 | 6.9 | 5.8 | 5.3 | 5.4 |

<Third aspect>

(Example 2-1)

Polyester A, polyester B, and polyester C were mixed at a mass ratio of 25:50:25 as a raw material of the outermost layer, polyester A and polyester C were mixed at a mass ratio of 50:50 as a raw material of the intermediate layer, and polyester B and polyester C were mixed at a mass ratio of 15:85 as a raw material of the sealing layer.
The respective mixed raw materials of the outermost layer, the intermediate layer, and the sealing layer were introduced into separate twin-screw extruders, and the mixed raw materials of the outermost layer and the intermediate layer were melted at 280°C, while the mixed raw material of the sealing layer was melted at 270°C.
Each of the raw materials was co-extruded onto a cooling roll set at 15°C to be cooled and solidified, and thus, three kinds of unstretched laminated films of three layers (outermost layer/intermediate layer/sealing layer) were obtained.
Next, the obtained unstretched laminated film was stretched 3.3 times in the longitudinal direction (MD) at 85°C with a roll stretching machine. Furthermore, the film was preheated to 95°C in a tenter and then stretched 4.2 times in the width direction (TD) at 110°C. Lastly, the film was subjected to a heat treatment at 225°C, and a laminated film having a thickness of 36 μm (outermost layer: 10 μm, intermediate layer: 55 μm, sealing layer: 10 μm) was obtained.
The characteristic of the obtained laminated films were evaluated by the above-described methods. The evaluation results are presented in Table 3.

(Example 2-2)

Polyester B and polyester C were mixed at a mass ratio of 50:50 as a raw material of the outermost layer. A laminated film was obtained by adopting the same raw material mass ratio and film-forming conditions for each layer other than the outermost layer as in Example 2-1.
The evaluation results are presented in Table 3.

(Comparative Example 2-1)

Polyester A and polyester C were mixed at a mass ratio of 60:40 as a raw material of the intermediate layer. A laminated film was obtained by adopting the same raw material mass ratio and film-forming conditions for each layer other than the intermediate layer as in Example 2-2. The evaluation results are presented in Table 3.

[Table 3]

| | | Example 2-1 | Example 2-2 | Comparative Example 2-1 |
|---|---|---|---|---|
| Thickness (μm) | Outermost layer | 10 | 10 | 10 |
| | Intermediate layer | 55 | 55 | 55 |
| | Sealing layer | 10 | 10 | 10 |
| | Total thickness | 75 | 75 | 75 |
| Other dicarboxylic acid component (mol%) | Outermost layer | 6 | 12 | 12 |
| | Intermediate layer | 12 | 12 | 10 |
| | Sealing layer | 20 | 20 | 20 |
| Heat seal strength (N/15 mm) | 140°c | 20 | 30 | 22 |
| | 160°c | 32 | 29 | 23 |
| | 180°c | 27 | 28 | 22 |
| | 200°c | 26 | 37 | 22 |
| | 220°c | 16 | 40 | 18 |
| Breaking strength (MPa) | MD | 86 | 85 | 106 |
| | TD | 122 | 113 | 136 |
| Unit piercing strength (N/mm) | | 212 | 221 | 304 |

(continued)

|  | | Example 2-1 | Example 2-2 | Comparative Example 2-1 |
|---|---|---|---|---|
| Shrinkage ratio (%) | MD | 1.8 | 2.4 | 1.9 |
| | TD | -0.9 | -1.4 | -1.0 |
| Haze (%) | | 7.3 | 10.0 | 10.9 |

INDUSTRIAL APPLICABILITY

The polyester-based sealant film of the present invention has sufficient mechanical characteristics such as low shrinkability, breaking strength, and piercing strength necessary for use as a sealant.

In addition, the polyester-based sealant film of the present invention has highly excellent heat seal strength.

Therefore, according to the present invention, since a packaging material based on a single material system composed of a polyester material can be realized by, for example, laminating another polyester-based base material film such as a transparent barrier vapor deposition PET, or by combining high barrier vapor deposition and printing processing technologies for polyester-based films, a packaging material having excellent recyclability can be provided.

**Claims**

1. A polyester-based sealant film, being a laminated film comprising at least two layers and having a sealing layer and an outermost layer,

   wherein the sealing layer includes a copolymerized polyester formed from a copolymer of terephthalic acid as well as another dicarboxylic acid component and a diol component,
   the outermost layer includes homopolyethylene terephthalate as a main component,
   the laminated film has a lamination configuration in which a content proportion (mol%) of the other dicarboxylic acid component in each layer decreases from the sealing layer toward the outermost layer, and
   a heat seal strength obtainable when the sealing layers of the laminated films are sealed at 0.2 MPa for 1 second in the range of 140°C to 220°C is 25 N/15 mm or higher.

2. A polyester-based sealant film, being a laminated film comprising at least two layers and having a sealing layer and an outermost layer,

   wherein the sealing layer includes a copolymerized polyester formed from a copolymer of terephthalic acid as well as another dicarboxylic acid component and a diol component,
   the outermost layer includes homopolyethylene terephthalate as a main component,
   the laminated film has a lamination configuration in which a content proportion (mol%) of the other dicarboxylic acid component in each layer decreases from the sealing layer toward the outermost layer,
   the thickness of the laminated film is less than 50 $\mu$m, and
   a heat seal strength obtainable when the sealing layers of the laminated films are sealed at 0.2 MPa for 1 second in the range of 140°C to 200°C is 25 N/15 mm or higher.

3. A polyester-based sealant film, being a laminated film comprising at least two layers and having a sealing layer and an outermost layer,

   wherein each layer includes a copolymerized polyester formed from a copolymer of terephthalic acid as well as another dicarboxylic acid component and a diol component,
   the laminated film has a lamination configuration in which a content proportion (mol%) of the other dicarboxylic acid component in each layer decreases from the sealing layer toward the outermost layer, and
   a heat seal strength obtainable when the sealing layers of the laminated films are sealed at 0.2 MPa for 1 second in the range of 160°C to 200°C is higher than 25 N/15 mm.

4. The polyester-based sealant film according to claim 1 or 2,
   wherein the polyester-based sealant film has an intermediate layer composed of at least one layer between the sealing layer and the outermost layer.

5. The polyester-based sealant film according to claim 4,

   wherein the intermediate layer includes a copolymerized polyester formed from a copolymer of terephthalic acid as well as another dicarboxylic acid component and a diol component, and
   the laminated film has a lamination configuration in which the content proportion (mol%) of the other dicarboxylic acid component in each layer decreases from the sealing layer toward the outermost layer.

6. The polyester-based sealant film according to claim 4 or 5,
   wherein the intermediate layer is a single layer.

7. The polyester-based sealant film according to claim 6,
   wherein a difference between a proportion of a total content of the other dicarboxylic acid component of the sealing layer and a proportion of a total content of the other dicarboxylic acid component of the intermediate layer is 1 mol% to 20 mol%.

8. The polyester-based sealant film according to claim 6 or 7,
   wherein a difference between a proportion of a total content of the other dicarboxylic acid component of the intermediate layer and a proportion of a total content of the other dicarboxylic acid component of the outermost layer is 5 mol% to 20 mol%.

9. The polyester-based sealant film according to claim 3,
   wherein the polyester-based sealant film has an intermediate layer composed of at least one layer between the sealing layer and the outermost layer.

10. The polyester-based sealant film according to claim 9,

    wherein the intermediate layer includes a copolymerized polyester formed from a copolymer of terephthalic acid as well as another dicarboxylic acid component and a diol component, and
    a content proportion (mol%) of the other dicarboxylic acid component included in the sealing layer is higher than a content proportion (mol%) of the other dicarboxylic acid component included in the intermediate layer.

11. The polyester-based sealant film according to claim 9 or 10,
    wherein a content proportion (mol%) of the other dicarboxylic acid component included in the intermediate layer is equal to or higher than a content proportion (mol%) of the other dicarboxylic acid component included in the outermost layer.

12. The polyester-based sealant film according to any one of claims 9 to 11,
    wherein the intermediate layer is a single layer.

13. The polyester-based sealant film according to claim 12,
    wherein a difference between a proportion of a total content of the other dicarboxylic acid component of the sealing layer and a proportion of a total content of the other dicarboxylic acid component of the intermediate layer is 1 mol% to 20 mol%.

14. The polyester-based sealant film according to claim 12 or 13,
    wherein a difference between a proportion of a total content of the other dicarboxylic acid component of the intermediate layer and a proportion of a total content of the other dicarboxylic acid component of the outermost layer is 0 mol% to 17 mol%.

15. The polyester-based sealant film according to any one of claims 4 to 14,
    wherein the intermediate layer includes homopolyethylene terephthalate.

16. The polyester-based sealant film according to any one of claims 1 to 15,
    wherein the other dicarboxylic acid component includes isophthalic acid and/or sebacic acid.

17. The polyester-based sealant film according to any one of claims 1 to 16,

wherein the outermost layer includes inorganic particles.

18. The polyester-based sealant film according to claim 3,
wherein the outermost layer includes homopolyethylene terephthalate.

19. The polyester-based sealant film according to any one of claims 1 to 18,
wherein the polyester-based sealant film has a barrier layer on the outermost layer.

20. A packaging material comprising the polyester-based sealant film according to any one of claims 1 to 19.

21. A laminated body comprising the polyester-based sealant film according to any one of claims 1 to 19 as at least one layer.

22. A packaging material comprising the laminated body according to claim 21 in at least a portion.

## INTERNATIONAL SEARCH REPORT

International application No.

**PCT/JP2021/037657**

### A. CLASSIFICATION OF SUBJECT MATTER

***B32B 27/36***(2006.01)i; ***B65D 65/40***(2006.01)i; ***C08L 67/02***(2006.01)i; ***C08K 3/013***(2018.01)i; ***B32B 7/04***(2019.01)i; ***C08G 63/183***(2006.01)i; ***C08G 63/185***(2006.01)i

FI:    B32B27/36; C08K3/013; C08L67/02; B65D65/40 D; B32B7/04; C08G63/183; C08G63/185

According to International Patent Classification (IPC) or to both national classification and IPC

### B. FIELDS SEARCHED

Minimum documentation searched (classification system followed by classification symbols)

B32B27/36; B65D65/40; C08L67/02; C08K3/013; B32B7/04; C08G63/183; C08G63/185

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2014/046277 A1 (TOYO SEIKAN KAISHA LTD.) 27 March 2014 (2014-03-27) claims, paragraphs [0009]-[0011], example 1 | 1, 2, 4-8, 15-22 |
| A | | 3, 9-14 |
| A | JP 2006-305975 A (FUJIMORI KOGYO KK) 09 November 2006 (2006-11-09) claims, example 1, 3 | 1-22 |
| A | JP 3-47752 A (DIAFOIL CO.) 28 February 1991 (1991-02-28) claims, p. 2, upper left column, line 18 to p. 3, lower right column, line 9, examples 1, 2 | 3, 9-22 |
| A | JP 2001-315284 A (KANEBO LTD.) 13 November 2001 (2001-11-13) claims, example 2 | 3, 9-22 |
| A | JP 2015-183718 A (TOYO SEIKAN GROUP HOLDINGS LTD.) 22 October 2015 (2015-10-22) claims, paragraphs [0011]-[0019], examples 1-7 | 1-22 |
| A | JP 2003-63519 A (TOYO SEIKAN KAISHA LTD) 05 March 2003 (2003-03-05) paragraph [0024] | 1-22 |

☐ Further documents are listed in the continuation of Box C.          ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 December 2021** | **14 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

23

**INTERNATIONAL SEARCH REPORT**
Information on patent family members

International application No.

**PCT/JP2021/037657**

| Patent document cited in search report | | | Publication date (day/month/year) | Patent family member(s) | | | Publication date (day/month/year) |
|---|---|---|---|---|---|---|---|
| WO | 2014/046277 | A1 | 27 March 2014 | US | 2015/0258757 | A1 | |
| | | | | claims, paragraphs [0015]-[0025], example 1 | | | |
| | | | | EP | 2899024 | A1 | |
| | | | | CA | 2883128 | A | |
| | | | | KR | 10-2015-0056852 | A | |
| JP | 2006-305975 | A | 09 November 2006 | (Family: none) | | | |
| JP | 3-47752 | A | 28 February 1991 | US | 5059470 | A | |
| | | | | claims, lanes 1-3, examples 1, 2 | | | |
| | | | | EP | 408042 | A2 | |
| | | | | DE | 69022499 | T2 | |
| JP | 2001-315284 | A | 13 November 2001 | (Family: none) | | | |
| JP | 2015-183718 | A | 22 October 2015 | (Family: none) | | | |
| JP | 2003-63519 | A | 05 March 2003 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002256116 A
- WO 2014175313 A
- JP 6724447 B